# EUROPÄISCHE PATENTSCHRIFT

(11) **EP 0 648 958 B1**
(45) Veröffentlichungstag und Bekanntmachung des Hinweises auf die Patenterteilung: **07.01.1999**
(21) Anmeldenummer: 94115556.6
(22) Anmeldetag: 04.10.1994
(51) Int. Cl.: F16H 3/093, F16H 3/10

(54) **Wechselgetriebe für Kraftfahrzeuge, insbesondere mit einem Low-Gang**
Motor vehicle gear-box, particularly with low speed gear train
Boîte de vitesses pour véhicules à moteurs, en particulier avec un train vitesse lente

(30) Priorität: 06.10.1993 DE 4334053
(43) Veröffentlichungstag der Anmeldung: 19.04.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Hofmann, Harald, D-50767 Köln (DE)
(74) Vertreter: Messulam, Alec Moses

(56) Entgegenhaltungen:
- EP-A- 0 083 747
- GB-A- 2 165 325
- US-A- 2 572 480
- US-A- 4 033 200

## Beschreibung

Die Erfindung bezieht sich auf ein Wechselgetriebe für Kraftfahrzeuge, insbesondere mit einem Low-Gang, der im Oberbegriff der Patentansprüche 1 bzw. 2 erläuterten Art.

Aus der EP-PS 0 083 747 ist ein Wechselgetriebe für Kraftfahrzeuge mit mehr als fünf Vorwärtsgängen bekannt, das wesentlich mit dem Aufbau des vorliegenden Wechselgetriebes übereinstimmt.

Das bekannte Wechselgetriebe treibt über zumindest eine Trennkupplung zumindest eine Antriebswelle an, auf der feste und lose Zahnräder angeordnet sind und weist zwei je über ein Ritzel auf das Eingangszahnrad eines Differentialgetriebes einwirkende Abtriebswellen mit darauf angeordneten festen und losen Zahnrädern auf, wobei jeweils ein festes und ein loses Zahnrad auf unterschiedlichen Wellen miteinander in ständigem Eingriff stehen und die losen Zahnräder über ihnen benachbarte Synchronisiervorrichtungen wahlweise mit ihren Wellen treibend verbindbar sind, um die unterschiedlichen Gänge zu schalten.

Bei dem bekannten Wechselgetriebe wird hierbei für das lose Zahnrad mit dem größten Durchmesser (1. Gang) die Anordnung einer in Antriebsrichtung sperrenden Freilaufkupplung vorgeschlagen. Die Anordnung der Freilaufkupplung kann hierbei parallel zu einer entsprechenden Kupplung der Synchronisiervorrichtung vorgesehen werden oder diese gänzlich ersetzen.

Das bekannte Wechselgetriebe ist hierbei jedoch derart aufgebaut, daß es zwei Trennkupplungen besitzt, die zwei getrennte Antriebswellen jeweils treibend beaufschlagen können. Der hierfür erforderliche Bauaufwand ist dementsprechend groß.

Die Aufgabe der Erfindung ist es, ein Wechselgetriebe für Kraftfahrzeuge, insbesondere mit einem Low-Gang und zwei Abtriebswellen derart zu verbessern, daß die insbesondere durch die große Masse des größten Zahnrades für den Low-Gang verursachten Getrieberasselgeräusche, die durch die vom Verbrennungsmotor herrührenden Drehschwingungen hervorgerufen werden, sicher vermieden werden; und ebenfalls die zu synchronisierenden Massen trotz der großen Räder möglichst klein gehalten werden.

Gemäß der Erfindung wird diese Aufgabe gelöst, indem bei einem Wechselgetriebe gemäß dem Oberbegriff des Patentanspruches 1 oder des Patentanspruches 2 die in den jeweiligen Kennzeichen der Ansprüche aufgezeigten Maßnahmen vorgesehen werden.

Dadurch, daß die Freilaufkupplung zusätzlich zur üblichen Lagerung der Zahnradnabe auf der Welle auf einem äußeren Umfang der Zahnradnabe zwischen dieser und einem getrennten Zahnkranz angeordnet wird, wird eine Massenentkopplung am größten Zahnrad für den Low-Gang erreicht, wodurch die sich aus den Drehschwingungen des Verbrennungsmotors ergebenden Anregungen nicht mehr störend aufschaukeln und zu Getrieberasselgeräuschen führen können; und nur noch die Masse des im ständigen Eingriff stehenden Zahradringes bei der Synchronisation eines beliebigen Ganges beschleunigt oder verzögert werden muß.

Dadurch, daß nach einer weiteren Ausführungsform der Erfindung anstelle der Freilaufkupplung eine weitere Lagerung zusätzlich zur üblichen Lagerung der Zahnradnabe auf der Welle auf einem äußeren Umfang der Zahnradnabe zwischen dieser und einem getrennten Zahnkranz vorgesehen wird und parallel zur Zahnradnabe ein mit dem getrennten Zahnkranz drehfest verbundenes Scheibenteil angeordnet wird, an dessen Nabe der Bremskonus und die Kupplungsverzahnung für die benachbarte Synchronisiervorrichtung ausgebildet ist, kann die erwünschte Massenentkopplung des größten Zahnrades für den Low-Gang ohne den Einsatz einer Freilaufkupplung realisiert werden, die ja den Nachteil mit sich bringt, daß sie nur in Antriebsrichtung sperrt und dementsprechend der Low-Gang z.B. bei schiebendem Fahrzeug zum Zweck einer Motorbremsung nicht wirksam werden kann.

Die Erfindung wird anhand zweier in den beigefügten Zeichnungen gezeigten Ausführungsformen näher erläutert. Es zeigt:
- Fig. 1: eine Getriebeaufrollung eines Wechselgetriebes für Kraftfahrzeuge, insbesondere mit einem Low-Gang unter Verwendung einer Freilaufkupplung und mit einem neben der Fig. 1 dargestellten Schaltschema;
- Fig. 2: eine Getriebeaufrollung eines Wechselgetriebes für Kraftfahrzeuge, insbesondere mit einem Low-Gang unter Verwendung einer Lagerung und einem mit dem Zahnkranz drehfest verbundenen Scheibenteil und einem neben der Fig. 2 dargestellten Schaltschema.

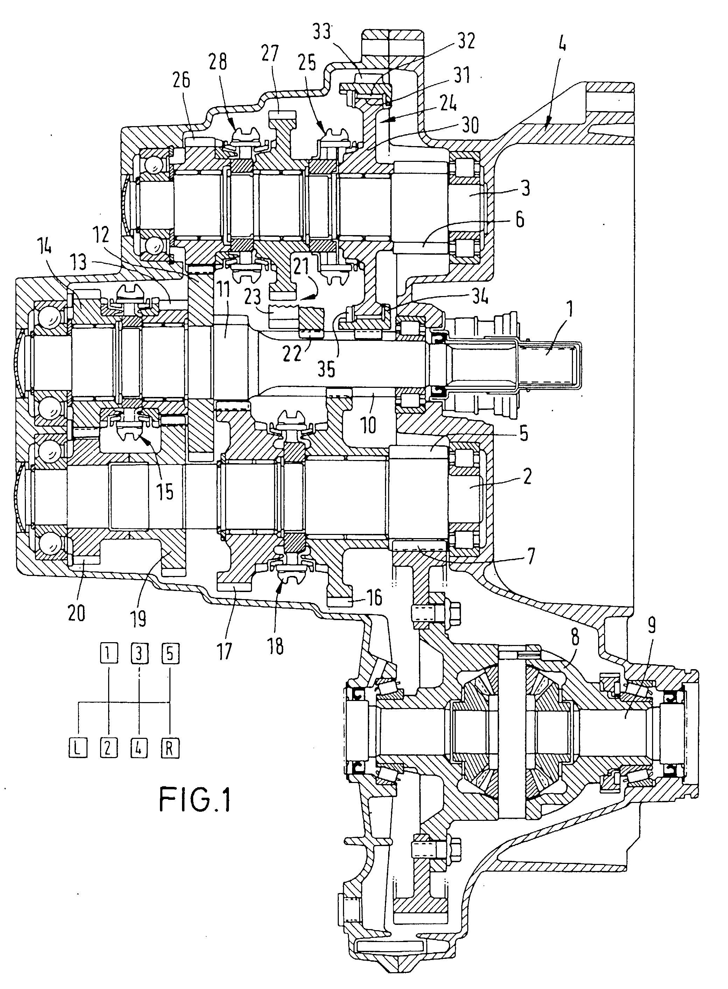

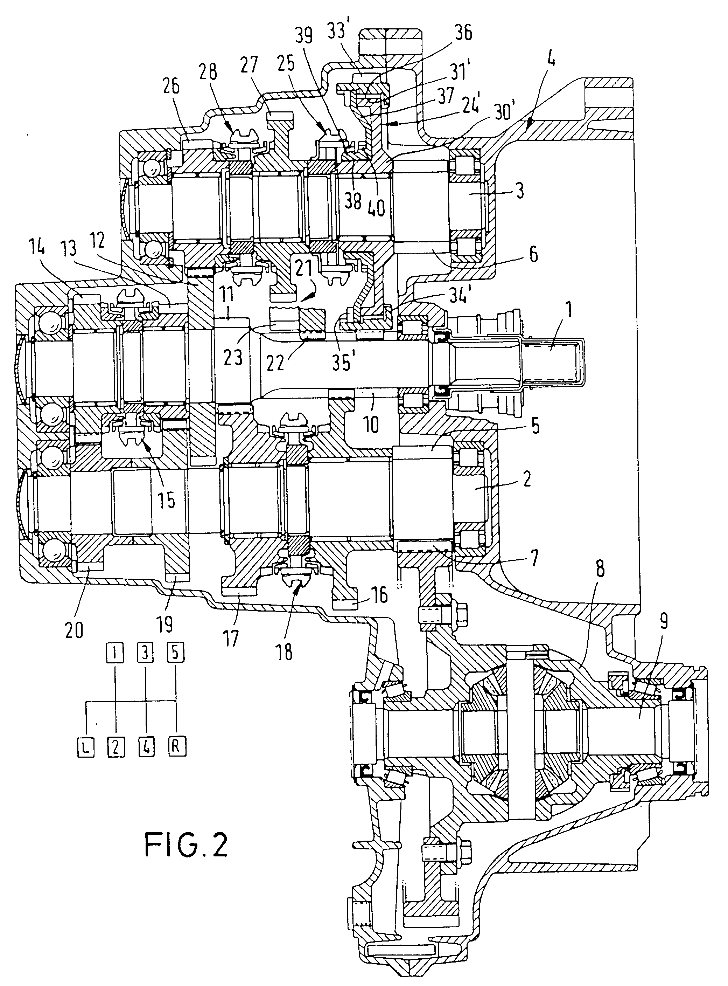

In den beiden Figuren 1 und 2 sind die übereinstimmenden Bauteile des Wechselgetriebes mit den gleichen Bezugszeichen versehen, lediglich die durch die unterschiedliche Bauform veränderten Bauteile werden in Fig. 2 mit einem entsprechenden Strich-Index versehenen.

Eine über eine Trennkupplung (nicht gezeigt) antreibbare Antriebswelle 1 ist mit darauf angeordneten festen und losen Zahnrädern versehen und eine erste Abtriebswelle 2 und eine zweite Abtriebswelle 3 sind gleichfalls mit festen und losen Zahnrädern versehen und sind in herkömmlicher Weise über entsprechende Lagerungen, z.B. in Form von Wälzlagerungen, in einem z.B. zweigeteilten Getriebegehäuse 4 drehbar gelagert angeordnet.

Die beiden Abtriebswellen 2 und 3 weisen feste Abtriebsritzel 5 und 6 auf, die beide in Eingriff mit einem Eingangszahnrad 7 eines Differentialgetriebes 8 stehen, das über Achswellen 9 über Gleichlaufgelenke (nicht gezeigt) Frontantriebswellen (nicht gezeigt) antreibt.

Auf der Antriebswelle 1 sind eingangsseitig das Festrad 10 für den Low-Gang, den ersten Gang und das Zwischenrad des Rückwärtsganges sowie das Festrad 11 für den zweiten Gang ausgebildet. Benachbart dem Festrad 11 für den zweiten Gang ist noch ein Festrad 12 für den fünften Gang angeordnet. Weiterhin sind auf der Antriebswelle 1 Losräder 13 und 14 für den dritten und vierten Gang angeordnet. Zwischen den beiden Losrädern 13 und 14 ist eine Doppel-Synchronisiervorrichtung 15 zum Schalten des dritten und vierten Ganges angeordnet. Auf der ersten Abtriebswelle 2 ist benachbart dem festen Ritzel 5 das Losrad 16 für den ersten Gang und das Losrad 17 für den zweiten Gang angeordnet. Zwischen den beiden Losrädern 16 und 17 ist eine Doppel-Synchronisiervorrichtung 18 zum Schalten des ersten und zweiten Ganges angeordnet. Weiterhin sind auf der ersten Abtriebswelle 2 die Festräder 19 und 20 für den dritten und vierten Gang angeordnet.

Auf einer Rückwärtsgangachse (nicht gezeigt) ist ein Doppel-Rückwärtsgang-Zwischenrad 21 angeordnet, dessen einer Zahnkranz 22 in Eingriff mit dem festen Zahnrad 10 für den ersten Gang steht und dessen zweiter Zahnkranz 23 in Eingriff mit einem Rückwärtsgangzahnrad 27 steht.

Auf der zweiten Abtriebswelle 3 ist benachbart dem festen Ritzel 6 ein loses Zahnrad 24 für den Low-Gang angeordnet, benachbart dem eine einfache Synchronisiervorrichtung 25 zum Schalten des Low-Ganges angeordnet ist. Weiterhin sind auf der zweiten Abtriebswelle 3 lose Zahnräder 26 und 27 für den fünften Gang und den Rückwärtsgang angeordnet. Zwischen den beiden losen Zahnrädern 26 und 27 ist eine Doppel-Synchronisiervorrichtung 28 zum Schalten des fünften Ganges und des Rückwärtsganges angeordnet.

Nachfolgend wird nun die Erfindung anhand des allgemein mit 24 bezeichneten losen Zahnrades für den Low-Gang detaillierter beschrieben.

Das lose Zahnrad 24 für den Low-Gang besteht gemäß der Erfindung aus einer Zahnradnabe 30, die an ihrem inneren Umfang in herkömmlicher Weise über Nadellager (nicht näher bezeichnet) auf der zweiten Abtriebswelle 3 drehbar gelagert ist. An einem äußeren Umfang 31 der Zahnradnabe 30 ist eine in Antriebsrichtung sperrende Freilaufkupplung 32 zwischen der Zahnradnabe 30 und einem getrennten Zahnkranz 33 angeordnet. Der Zahnkranz 33 ist über eine axiale Schulter 34 und ein Anlaufelement 35 axial an der Zahnradnabe 30 abgestützt.

Die Freilaufkupplung 32 kann eine an sich bekannte Rollenfreilaufkupplung sein, die nur in Antriebsrichtung sperrt, d.h., wenn der Zahnkranz 33 angetrieben durch das feste Zahnrad 10 ein Drehmoment auf die Zahnradnabe 30 überträgt und die Zahnradnabe 30 dieses Drehmoment über die eingerückte Einfach-Synchronvorrichtung 25 auf die zweite Abtriebswelle 2 und das feste Ritzel 6 überträgt.

Wird der Low-Gang ausgerückt und durch Verschieben der Doppel-Synchronisiervorrichtung 18 in Fig. 1 nach rechts der erste Gang eingeschaltet, so wird das Drehmoment von der Antriebswelle 1 über die nun geringere Untersetzung auf die erste Abtriebswelle 2 und über das feste Ritzel 5 auf das Eingangszahnrad 7 des Differentialgetriebes 8 übertragen und dementsprechend wird die zweite Abtriebswelle 3, die über das feste Ritzel 6 gleichfalls in Eingriff mit dem Eingangszahnrad 7 steht, schneller angetrieben werden.

An sich würde die gelöste Einfach-Synchronisiervorrichtung 25 und die entsprechende Lagerung der Zahnradnabe 30 über die inneren Nadellager ausreichen die Getriebefunktion zu sichern. Über den nach wie vor in Eingriff mit dem festen Zahnrad 10 stehenden Zahnkranz 33 gelangen jedoch vom Verbrennungsmotor herrührende Drehschwingungen über die Antriebswelle 1 auf den Zahnkranz 33 und würden, wäre das lose Zahnrad 24 des Low-Ganges in herkömmlicher Weise in einstückiger Ausführung ausgebildet, dazu führen, daß die gegenüber der Antriebswelle erheblich größere Masse des losen Zahnrades des Low-Ganges zu Resonanzschwingungen aufschaukeln und hierdurch Getrieberasselgeräusche verursachen würde. Die relativ große Masse des größten Zahnrades des Wechselgetriebes ist nämlich nicht in der Lage, die von Drehschwingungen eingeleiteten Wechselbeschleunigungen ohne Verzögerungen mit zu vollführen, wodurch eben diese Rasselgeräusche entstehen.

Durch die Trennung der Hauptmasse der Zahnradnabe 30 von den umlaufenden Massen wird das zur Synchronisation notwendige Moment aller Gänge, im besonderen des Low-Ganges, stark reduziert. Zu den zu synchronisierenden Massen ist nun nur noch der äußere dünne Zahnkranz 33 zu addieren.

Durch die erfindungsgemäße Ausbildung des losen Zahnrades 24 für den Low-Gang in der Weise, daß der weiterhin in Eingriff mit dem festen Zahnrad 10 stehende Zahnkranz 33 von der Hauptmasse der Zahnradnabe 30 über die Freilaufkupplung 32 abgekoppelt wird, wirken sich entsprechende Beschleunigungen bzw. Verzögerungen und Drehschwingungen nur auf den eine wesentlich geringere Masse aufweisenden Zahnkranz 33 aus.

Die in Fig. 1 gezeigte Ausführungsform der vorliegenden Erfindung erfordert einen verhältnismäßig geringen Bauaufwand, weist jedoch den Nachteil auf, daß bei eingelegtem Low-Gang das Vorhandensein der nur in Antriebsrichtung sperrenden Freilaufkupplung dazu führt, daß z.B. bei steiler Bergabfahrt und schiebenden Fahrzeug der Low-Gang nicht zur Motorbremsung herangezogen werden kann.

Um diesen Nachteil zu beseitigen, wird als weitere Ausführungsform der Erfindung die Ausführung gemäß Fig. 2 erläutert, in der dieser Nachteil vermieden wird.

In Fig. 2 sind die im Wechselgetriebe unverändert bleibenden Einzelbauteile mit den gleichen Bezugszeichen versehen, wie sie in Fig. 1 verwendet werden. Eine generelle Erläuterung des Aufbaues des Wechselgetriebes braucht daher nicht nochmals zu erfolgen, sondern es wird hierzu auf die entsprechende Beschreibung in Verbindung mit Fig. 1 hingewiesen.

Die für die andere Ausführungsform der Erfindung wesentlichen abgeänderten Bauteile, wie das lose Zahnrad 24' für den Low-Gang, sind mit den gleichen mit einem Strich-Index versehenen Bezugszeichen bzw. mit weiteren Bezugszeichen versehen.

Die Zahnradnabe 30' des losen Zahnrades 24' des Low-Ganges ist wieder in herkömmlicher Weise über ein inneres Nadellager auf der zweiten Abtriebswelle 3 drehbar gelagert. Die Zahn- radnabe 30' weist wieder einen äußeren Umfang 31' und einen getrennten Zahnkranz 33' auf, wobei der getrennte Zahnkranz 33' über eine Schulter 34' und ein Anschlagelement 35' axial gegenüber der Zahnradnabe 30' geführt ist. Anstelle der Freilaufkupplung gemäß Fig. 1 ist hier jedoch eine Lagerung 36 vorgesehen, die z.B. in Form einer Gleitlagerung oder eines Nadellagers ausgebildet sein kann. Parallel zur Zahnradnabe 30' erstreckt sich ein Scheibenteil 37, das mit seinem äußeren Umfang drehfest mit dem Zahnkranz 33' verbunden ist. An seinem inneren Umfang 38 ist das Scheibenteil 37 drehbar auf der Zahnradnabe 30' abgestützt und weist einen Synchronkonus 39 und eine Kupplungsverzahnung 40 für die benachbarte Synchronisiervorrichtung 25 auf.

Wird bei einem Wechselgetriebe nach dieser Ausführungsform der Low-Gang durch Verschieben der Einfach-Synchronisiervorrichtung 25 in Fig. 2 gesehen nach rechts eingerückt, so wird eine in beiden Drehrichtungen treibende Verbindung zwischen dem Zahnkranz 33' und der zweiten Abtriebswelle 3 hergestellt und dementsprechend wird ein Drehmoment das von der Antriebswelle 1 über das feste Zahnrad 10 auf den Zahnkranz 33' übertragen wird, in beiden Drehrichtungen gehalten, so daß bei dieser Ausführungsform der Low-Gang auch für den Zweck einer Motorbremsung benutzt werden kann.

Der Vollständigkeit halber wird noch darauf hingewiesen, daß selbstverständlich die Lagerung des Zahnkranzes 33' auf der Zahnradnabe 30' in herkömmlicher Weise sowohl als Gleitals auch als Wälzlager ausgebildet werden kann; und diese doppelte Gleit- oder Wälzlagerung für alle Losräder durchmesserabhängig möglich ist.

## Patentansprüche

1. Wechselgetriebe für Kraftfahrzeuge, insbesondere mit einem Low-Gang, mit einer über zumindest eine Trennkupplung (nicht gezeigt) antreibbare, zumindest eine Antriebswelle (1) mit darauf angeordneten festen und losen Zahnrädern (10, 11 und 12 bzw. 13 und 14) und zwei über je ein festes Ritzel (5 und 6) auf ein Eingangszahnrad (7) eines Differentialgetriebes (8) einwirkenden ersten und zweiten Abtriebswellen (2 und 3) mit darauf angeordneten losen und festen Zahnrädern (16 und 17 bzw. 19 und 20 und 24, 26 und 27) und wobei jeweils ein festes und ein loses Zahnrad auf unterschiedlichen Wellen miteinander in ständigem Eingriff stehen und die losen Zahnräder über ihnen benachbarte Synchronisiervorrichtungen (15, 18, 25 und 28) wahlweise mit ihren Wellen treibend verbindbar sind und wobei zumindest das lose Zahnrad (24) mit dem größten Durchmesser über eine nur in Antriebsrichtung sperrende Freilaufkupplung (32) und einer Synchronisiervorrichtung (25) mit seiner Welle verbindbar ist,
**dadurch gekennzeichnet,** daß
- die Freilaufkupplung (32) zusätzlich zur üblichen Lagerung der Zahnradnabe (30) auf der Abtriebswelle (3) auf einem äußeren Umfang (31) der Zahnradnabe (30) zwischen dieser und einem getrennten Zahnkranz (33) angeordnet ist.

2. Wechselgetriebe für Kraftfahrzeuge, insbesondere mit einem Low-Gang, mit einem über zumindest eine Trennkupplung (nicht gezeigt) antreibbare, zumindest eine Antriebswelle (1) mit darauf angeordneten festen und losen Zahnrädern (10, 11 und 12 bzw. 13 und 14) und zwei über je ein festes Ritzel (5 und 6) auf ein Eingangszahnrad (7) eines Differentialgetriebes (8) einwirkenden ersten und zweiten Abtriebswellen (2 und 3) mit darauf angeordneten losen und festen Zahnrädern (16 und 17 bzw. 19 und 20 sowie 24, 26 und 27) und wobei jeweils ein festes und ein loses Zahnrad auf unterschiedlichen Wellen miteinander in ständigem Eingriff stehen und die losen Zahnräder über ihnen benachbarte Synchronisiervorrichtungen (15, 18, 25 und 28) wahlweise mit ihren Wellen treibend verbindbar sind,
**dadurch gekennzeichnet,** daß
- eine Lagerung (36) zusätzlich zur üblichen Lagerung der Zahnradnabe (30') auf der zweiten Abtriebswelle (3) auf einem äußeren Umfang (31') der Zahnradnabe (30') zwischen dieser und einem getrennten Zahnkranz (33') angeordnet ist und
- parallel zur Zahnradnabe (30') ein mit dem getrennten Zahnkranz (33') drehfest verbundenes Scheibenteil (37) an der Zahnradnabe (30') beim inneren Umfang (38) des Scheibenteils (37) drehbar gelagert ist, an dessen Nabe der Bremskonus (39) und die Kupplungsverzahnung (40) für die benachbarte Synchronisiervorrichtung (25) ausgebildet ist.

## Claims

1. A change-speed gearbox for motor vehicles, particularly one having a low gear, comprising an at least one drive shaft (1), drivable through at least one separating coupling (not shown), said shaft carrying fixed gearwheels (10, 11 and 12) and loose gearwheels (13 and 14), and two first and second output shafts (2 and 3) each acting through a fixed pinion (5 and 6) on an input gearwheel (7) of a differential (8) and carrying loose gearwheels (16 and 17; 24, 26 and 27) and fixed gearwheels (19 and 20), with in each case a fixed and a loose gearwheel on different shafts being in constant mesh and the loose gearwheels being selectively drivingly connectable to their shafts through adjacent synchronisers (15, 18, 25 and 28) and with at least the largest diameter loose gearwheel (24) being connectable to its shaft through a one-way clutch (32) which can only lock in the driving direction and a synchroniser (25),
characterised in that
- in addition to the usual mounting of the gearwheel hub (30) on a bearing on the output shaft (3), the one-way clutch (32) is fitted on an outer circumference (31) of the gearwheel hub (30), between said hub and a separate ring gear (33).

2. A change-speed gearbox for motor vehicles, particularly one having a low gear, comprising an at least one drive shaft (1), drivable through at least one separating coupling (not shown), said shaft carrying fixed gearwheels (10, 11 and 12) and loose gearwheels (13 and 14), and two first and second output shafts (2 and 3) each acting through a fixed pinion (5 and 6) on an input gearwheel (7) of a differential (8) and carrying loose gearwheels (16 and 17; 24, 26 and 27) and fixed gearwheels (19 and 20), with in each case a fixed and a loose gearwheel on different shafts being in constant mesh and the loose gearwheels being selectively drivingly connectable to their shafts through adjacent synchronisers (15, 18, 25 and 28),
characterised in that
- in addition to the usual mounting of the gearwheel hub (30') on a bearing on the second output shaft (3) a bearing arrangement (36) is provided on an outer circumference (31') of the gearwheel hub (30') between said hub and a separate ring gear (33'), and
- parallel to the gearwheel hub (30') a disc member (37) connected non-rotatably to the separate ring gear (33') is mounted rotatably on the gearwheel hub (30') at the inner circumference (38) of the disc member (37), and has the brake cone (39) and the coupling teeth (40) for the adjacent synchroniser (25) formed on its hub.

## Revendications

1. Boîte de vitesses pour véhicules automobiles, notamment avec un rapport bas, comprenant au moins un arbre primaire (1), pouvant être entraîné par l'intermédiaire d'au moins un embrayage séparateur (non représenté) et sur lequel sont disposées des roues dentées fixes et libres (10, 11 et 12 ou 13 et 14), et deux arbres secondaires (2 et 3), un premier et un deuxième, agissant par l'intermédiaire d'un pignon fixe respectif (5 et 6) sur une roue dentée d'entrée (7) d'un engrenage différentiel (8) et sur lesquels sont disposées des roues dentées libres et fixes (16 et 17 ou 19 et 20 et 24, 26 et 27), une roue dentée fixe et une roue dentée libre qui se trouvent sur des arbres différents étant respectivement en prise mutuelle permanente, et les roues dentées libres pouvant être sélectivement reliées en entraînement à leurs arbres par l'intermédiaire de dispositifs de synchronisation (15, 18, 25 et 28) qui en sont voisins, et au moins la roue dentée libre (24) de plus grand diamètre pouvant être reliée à son arbre par l'intermédiaire d'un embrayage à roue libre (32) bloquant seulement dans la direction d'entraînement, et d'un dispositif de synchronisation (25),
**caractérisée** en ce que l'embrayage à roue libre (32) est disposé en plus du palier de montage habituel du moyeu de roue dentée (30) sur l'arbre secondaire (3), sur une périphérie extérieure (31) du moyeu de roue dentée (30) entre ce dernier et une couronne dentée séparée (33).

2. Boîte de vitesses pour véhicules automobiles, notamment avec un rapport bas, comprenant au moins un arbre primaire (1), pouvant être entraîné par l'intermédiaire d'au moins un embrayage séparateur (non représenté) et sur lequel sont disposées des roues dentées fixes et libres (10, 11 et 12 ou 13 et 14), et deux arbres secondaires (2 et 3), un premier et un deuxième, agissant par l'intermédiaire d'un pignon fixe respectif (5 et 6) sur une roue dentée d'entrée (7) d'un engrenage différentiel (8) et sur lesquels sont disposées des roues dentées libres et fixes (16 et 17 ou 19 et 20 ainsi que 24, 26 et 27), une roue dentée fixe et une roue dentée libre qui se trouvent sur des arbres différents étant respectivement en prise mutuelle permanente, et les roues dentées libres pouvant être sélectivement reliées en entraînement à leurs arbres par l'intermédiaire de dispositifs de synchronisation (15, 18, 25 et 28) qui en sont voisins,
**caractérisée** en ce que
- un palier de montage (36) est disposé en plus du palier de montage habituel du moyeu de roue dentée (30') sur le deuxième arbre secondaire (3), sur une périphérie extérieure (31') du moyeu de roue dentée (30') entre ce dernier et une couronne dentée séparée (33'), et
- une partie de disque (37), assemblée en solidarité de rotation à la couronne dentée séparée (33'), est montée à rotation, sur la périphérie intérieure (38) de la partie de disque (37), sur le moyeu de roue dentée (30') parallèlement au moyeu de roue dentée (30'), le cône de freinage (39) et la denture d'accouplement (40) pour le dispositif de synchronisation voisin (25) étant configurés sur le moyeu de cette partie de disque (37).
